# EUROPÄISCHE PATENTANMELDUNG

(11) **EP 4 191 722 A1**
(43) Veröffentlichungstag der Anmeldung: **07.06.2023**
(21) Anmeldenummer: 21211575.2
(22) Anmeldetag: 01.12.2021
(51) Int. Cl.: H01M 10/052, H01M 10/0587, H01M 10/643, H01M 10/651, H01M 10/6551, H01M 50/107, H01M 50/213, H01M 50/533, H01M 50/548, H01M 50/559

(54) **ENERGIEVERSORGUNGSVORRICHTUNG UND WERKZEUGMASCHINE MIT EINER SOLCHEN ENERGIEVERSORGUNGSVORRICHTUNG**

(71) Anmelder: Hilti Aktiengesellschaft, 9494 Schaan (LI)
(72) Erfinder: Stanger, Robert, 87600 Kaufbeuren (DE); Hartmann, Markus, 87665 Mauerstetten (DE)
(74) Vertreter: Hilti Aktiengesellschaft Corporate Intellectual Property

(57) **Zusammenfassung**

Die vorliegende Erfindung betrifft eine Energieversorgungsvorrichtung, insbesondere für eine Werkzeugmaschine, wobei die Energieversorgungsvorrichtung mindestens einer Zelle umfasst. Die mindestens eine Zelle weist einen Innenwiderstand DCR_I von kleiner als 10 Milliohm, bevorzugt kleiner als 8 Milliohm und am meisten bevorzugt kleiner 6 Milliohm auf. In einem zweiten Aspekt betrifft die Erfindung eine Werkzeugmaschine mit einer vorgeschlagenen Energieversorgungsvorrichtung.

## Beschreibung

Die vorliegende Erfindung betrifft eine Energieversorgungsvorrichtung, insbesondere für eine Werkzeugmaschine, wobei die Energieversorgungsvorrichtung mindestens einer Zelle umfasst. Die vorliegende Erfindung betrifft eine Energieversorgungsvorrichtung, insbesondere für eine Werkzeugmaschine, wobei die Energieversorgungsvorrichtung mindestens einer Zelle umfasst. Die mindestens eine Zelle weist einen Innenwiderstand DCR_I von kleiner als 10 Milliohm, bevorzugt kleiner als 8 Milliohm und am meisten bevorzugt kleiner 6 Milliohm auf. In einem zweiten Aspekt betrifft die Erfindung eine Werkzeugmaschine mit einer vorgeschlagenen Energieversorgungsvorrichtung.

### Hintergrund der Erfindung:

Die Erfindung ist im technischen Gebiet der Werkzeugmaschinen angesiedelt. In diesem technischen Gebiet kommen zunehmend kabellose Werkzeugmaschinen zum Einsatz, die über Energieversorgungsvorrichtungen, wie Akkumulatoren ("Akkus") oder wiederaufladbare Batterien mit elektrischer Energie oder Strom versorgt werden. Üblicherweise weisen die Energieversorgungsvorrichtungen der Werkzeugmaschinen Batteriepacks mit zylinderfömigen Zellen auf, die preiswert in der Herstellung sind und in standardisierten Größen hergestellt werden können.

Akkus oder wiederaufladbare Batterien von Werkzeugmaschinen sind in der Regel so gestaltet, dass sie eine applikationsspezifische Kapazität in der Einheit Ampèrestunden (Ah) auf möglichst wirtschaftliche Weise zur Verfügung stellen. Übliche Anwendungen im Bereich der Werkzeugmaschinen beschränken sich auf kurze Arbeits- bzw. Betriebszeiträume und kleine bis mittlere Leistungen.

Es ist daher ein Anliegen der vorliegenden Erfindung, eine Energieversorgungsvorrichtung, insbesondere für eine Werkzeugmaschine, bereitzustellen, die auch für längere Arbeits- bzw. Betriebszeiträume und höhere Leistungsbereiche eingesetzt werden kann. Ein besonderes Anliegen ist dabei, eine Energieversorgungsvorrichtung bereitzustellen, die thermisch robust gegenüber hohen Erwärmungen ist, wobei solche Erwärmungen sowohl für die einzelnen Zellen der Energieversorgungsvorrichtung, als auch für die Kunststoffteile der Energieversorgungsvorrichtung schädlich sein können.

Werkzeugmaschinen, die beispielsweise für schwere Arbeiten auf einer Baustelle eingesetzt werden sollen, haben einen hohen Leistungsbedarf, der mit einem hohen Entladestrom der Energieversorgungsvorrichtung einhergehen kann. Bei solchen hohen Entladeströmen kann es vorkommen, dass sich konventionelle, beispielsweise zylindrische Zellen der Energieversorgungsvorrichtung stark erwärmen. Eine solche Erwärmung ist aber unerwünscht, weil zum einen Aufwand betrieben werden muss, um die Wärme abzuführen. Zum anderen kann es bei unzureichender Wärmeabfuhr zu Beschädigungen an der Werkzeugmaschine, ihren Komponenten oder der Energieversorgungsvorrichtung kommen. Insofern kann eine potentielle Gefährdung für einen Nutzer und ein Risiko für den Betrieb der Werkzeugmaschine die Folge sein.

Die Aufgabe, die der vorliegenden Erfindung zugrunde liegt, besteht darin, die vorstehend beschriebenen Mängel und Nachteile des Standes der Technik zu überwinden und eine Energieversorgungsvorrichtung bereitzustellen, bei der die Erwärmung innerhalb der Energieversorgungsvorrichtung reduziert werden kann. Darüber hinaus soll eine Werkzeugmaschine mit einer entsprechenden Energieversorgungsvorrichtung angegeben werden.

Die Aufgabe wird gelöst durch den Gegenstand der unabhängigen Ansprüche. Vorteilhafte Ausführungsformen zu dem Gegenstand der unabhängigen Ansprüche finden sich in den abhängigen Ansprüchen.

### Beschreibung der Erfindung:

Erfindungsgemäß ist eine Energieversorgungsvorrichtung, insbesondere für eine Werkzeugmaschine, vorgesehen, wobei die Energieversorgungsvorrichtung mindestens einer Zelle umfasst. Die mindestens eine Zelle weist einen Innenwiderstand DCR_I von kleiner als 10 Milliohm (mOhm) auf. In bevorzugten Ausgestaltungen der Erfindung kann der Innenwiderstand DCR_I der mindestens einen Zelle kleiner als 8 Milliohm und bevorzugt kleiner 6 Milliohm sein. Dabei wird der Innenwiderstand DCR_I vorzugsweise nach der Norm IEC61960 gemessen. Der Innenwiderstand DCR_I stellt insbesondere den Widerstand einer Zelle der Energieversorgungsvorrichtung dar, wobei etwaige Komponenten oder Zubehörteile der Zelle keinen Beitrag zum Innenwiderstand DCR_I leisten. Ein geringer Innenwiderstand DCR_I ist von Vorteil, da dadurch unerwünschte Wärme, die abgeführt werden muss, überhaupt nicht entsteht. Der Innenwiderstand DCR_I ist insbesondere ein Gleichstrom-Widerstand, der im Inneren einer Zelle der vorgeschlagenen Energieversorgungsvorrichtung gemessen werden kann. Selbstverständlich kann der Innenwiderstand DCR_I auch Zwischenwerte, wie 6,02 Milliohm; 7,49 Milliohm; 8,33 Milliohm; 8,65 Milliohm oder 9,5 Milliohm, annehmen.

Es hat sich gezeigt, dass mit dem Innenwiderstand DCR_I der mindestens einen Zelle von kleiner als 10 Milliohm eine Energieversorgungsvorrichtung bereitgestellt werden kann, die besonders gute thermische Eigenschaften in dem Sinne aufweist, dass sie besonders gut bei niedrigen Temperaturen betrieben werden kann, wobei der Kühlaufwand überraschend gering gehalten werden kann. Insbesondere ist die vorgeschlagene Energieversorgungsvorrichtung besonders gut geeignet, um besonders leistungsstarke Werkzeugmaschinen mit elektrischer Energie zu versorgen. Die vorgeschlagene Energieversorgungsvorrichtung kann somit einen wertvollen Beitrag dazu leisten, einen Einsatz von akkubetriebenen Werkzeugmaschinen auch in solchen Anwendungsgebieten zu ermöglichen, von denen die Fachwelt bisher davon ausgegangen war, dass diese Anwendungsgebiete akkubetriebenen Werkzeugmaschinen nicht zugänglich sind.

Die Erfinder haben erkannt, dass bei konventionellen Energieversorgungsvorrichtungen, wie sie aus dem Stand der Technik bekannt sind, hohe Erwärmungen insbesondere auf hohe Innenwiderstände der einzelnen Zellen der Energieversorgungsvorrichtung zurückzuführen sind. Insbesondere dann, wenn diese hohe Einzelzellen-Innenwiderstände in Verbindung mit einem hohen Einzelzellen-Erwärmungskoeffizienten und/oder in Verbindung mit einer geringen Einzelzellen-Lade- und Entladerate auftritt, treten die unerwünschten hohen Erwärmungen auf, die zu Schäden an der Energieversorgungsvorrichtung führen können. Die Erfindung begegnet dieser thermischen Belastung der Energieversorgungsvorrichtung, indem mindestens eine Zelle innerhalb der Energieversorgungsvorrichtung einen Innenwiderstand DCR_I von kleiner als 10 Milliohm (mOhm) aufweist. Dadurch können die unerwünschten hohen Erwärmungen besonders wirksam vermieden werden, wie Tests gezeigt haben. Insbesondere kann mit der Erfindung eine Lösung dafür geschaffen werden, eine batterie- oder akkubetriebene Werkzeugmaschine mit einer erfindungsgemäßen Energieversorgungsvorrichtung über einen langen Zeitraum mit einer hohen Abgabeleistung zu versorgen, ohne die umliegenden Kunststoffbauteile oder die Zellchemie innerhalb der Zellen der Energieversorgungsvorrichtung zu schädigen.

Der mit der Erfindung angestrebte geringe Innenwiderstand DCR_I der Energieversorgungsvorrichtung kann beispielsweise dadurch erreicht werden, dass ein Widerstand des Stromableiters oder des Stromsammlers innerhalb der Energieversorgungsvorrichtung reduziert wird. Der Begriff «Stromableiter» wird im Sinne der Erfindung für Elemente innerhalb der Zelle verwendet, die dazu eingerichtet sind, eine Kathode oder eine Anode der Zelle mit einem äußeren Plus- oder Minuspol der Zelle zu verbinden. Diese Elemente können beispielsweise Metallstreifen umfassen oder aus ihnen gebildet sein. Der Begriff «Stromsammler» wird im Sinne der Erfindung bevorzugt für solche Bauteile innerhalb einer Zelle verwendet, die mehrere Stromableiter zusammenfassen.

Die Reduzierung des Widerstands der Stromsammler kann beispielsweise dadurch erreicht werden, dass ein Leiterquerschnitt erhöht oder eine Leiterlänge reduziert wird. Beispielsweise kann eine elektrischer Leiter mit einem höheren Querschnitt verwendet werden. Darüber hinaus könnten größeren Leiterschichtdicken verwendet werden, um den überraschend geringen Innenwiderstand DCR_I zu ermöglichen. Ferner kann die Länge des Stromsammlers deutlich reduziert werden, wenn mehrere Ableiter an die Stromsammler der Energieversorgungsvorrichtung angebracht werden. Dadurch kann vorteilhafterweise erreicht werden, dass ein elektrischer Strom nicht mehr dazu gezwungen ist, durch die gesamte Stromsammlerlänge zu fließen. Stattdessen kann es ausreichend sein, wenn der elektrische Strom vorzugsweise bis zum nächsten oder nächstliegenden Stromableiter fließt, um dort abgeleitet zu werden. Der Widerstand der Stromableiter kann bevorzugt in analoger Weise reduziert werden, indem eine größere Anzahl von Ableiters und/oder größere Leiterquerschnitte verwendet werden. Mögliche Ausgestaltungen von solchen Energieversorgungsvorrichtung sind in die Figuren abgebildet.

Insbesondere können durch die vorgeschlagenen Maßnahmen Energieversorgungsvorrichtung mit besonders geringen Verhältnissen von Widerstand zu Oberfläche A einer Einzelzelle der Energieversorgungsvorrichtung und Widerstand zu Volumen V einer Einzelzelle der Energieversorgungsvorrichtung bereitgestellt werden. Es ist im Sinne der Erfindung bevorzugt, dass ein Verhältnis eines Widerstands der mindestens einen Zelle zu einer Oberfläche A der mindestens einen Zelle kleiner als 0,2 Milliohm/cm² ist, bevorzugt kleiner als 0,1 Milliohm/cm² und am meisten bevorzugt kleiner als 0,05 Milliohm/cm². Bei einer zylindrischen Zelle kann die Oberfläche der Zelle beispielsweise von der Außenfläche des Zylinders, sowie der Oberseite und der Unterseite der Zelle gebildet werden. Es kann darüber hinaus im Sinne der Erfindung bevorzugt sein, dass ein Verhältnis eines Widerstands der mindestens einen Zelle zu einem Volumen V der mindestens einen Zelle kleiner als 0,4 Milliohm/cm³ ist, bevorzugt kleiner als 0,3 Milliohm/cm³ und am meisten bevorzugt kleiner als 0,2 Milliohm/cm³. Der Fachmann kennt für übliche geometrische Formen, wie Quader, Würfel, Kugel oder dergleichen, die Formeln zur Berechnung der Oberfläche oder des Volumens eines solchen geometrischen Körpers. Der Begriff «Widerstand» bezeichnet im Sinne der Erfindung bevorzugt den Innenwiderstand DCR_I, der vorzugsweise nach der Norm IEC61960 gemessen werden kann. Vorzugsweise handelt es sich dabei um einen Gleichstrom-Widerstand.

Es ist im Sinne der Erfindung bevorzugt, dass die mindestens eine Zelle einen Erwärmungskoeffizienten von kleiner als 1,0 Vvl(Ah·A) aufweist, bevorzugt kleiner als 0,75 Vvl(Ah·A) und besonders bevorzugt von kleiner als 0,5 W/(Ah·A). Darüber hinaus kann die mindestens eine Zelle dazu ausgebildet sein, im Wesentlichen konstant einen Strom von größer als 1.000 Ampère/Liter abzugeben. Die Angabe des Entladestroms erfolgt in Bezug auf das Volumen der mindestens einen Zelle, wobei als Einheit für das Volumen die Raum-Maßeinheit «Liter» (I) verwendet wird. Die erfindungsgemäßen Zellen sind somit in der Lage, pro Liter Zellvolumen einen Entladestrom von im Wesentlichen konstant größer als 1.000 A abzugeben. Mit anderen Worten ist eine Zelle mit einem Volumen von 1 Liter in der Lage, einen im Wesentlichen konstanten Entladestrom von größer als 1.000 A abzugeben, wobei die mindestens eine Zelle darüber hinaus einen Erwärmungskoeffizienten von kleiner als 1,0 Vvl(Ah·A) aufweist. In bevorzugten Ausgestaltungen der Erfindung kann die mindestens eine Zelle der vorgeschlagenen Energieversorgungsvorrichtung einen Erwärmungskoeffizienten von kleiner als 0,75 W/(Ah·A), bevorzugt kleiner als 0,5 W/ (Ah·A) aufweisen. Die Einheit des Erwärmungskoeffizienten lautet Watt / (Ampèrestunden . Ampère). Selbstverständlich kann der Erwärmungskoeffizient auch Zwischenwerte, wie 0,56 W/(Ah.A); 0,723 W/(Ah.A) oder 0,925 W/(Ah.A) aufweisen.

Die Erfindung ermöglicht vorteilhafterweise die Bereitstellung einer Energieversorgungsvorrichtung mit mindestens einer Zelle, die eine verringerte Erwärmung aufweist und somit besonders gut für die Versorgung von Werkzeugmaschine geeignet ist, bei denen hohe Leistungen und hohe Ströme, vorzugsweise Konstant-Ströme, für den Betrieb erwünscht sind. Insbesondere kann mit der Erfindung eine Energieversorgungsvorrichtung für eine Werkzeugmaschine bereitgestellt werden, bei der die Wärme, die gegebenenfalls bei Betrieb der Werkzeugmaschine und bei Abgabe von elektrischer Energie an die Werkzeugmaschine entsteht, besonders einfach und unkompliziert abgeführt werden kann. Tests haben gezeigt, dass mit der Erfindung nicht nur vorhandene Wärme besser abgeführt werden kann. Vielmehr wird mit der Erfindung verhindert, dass Wärme entsteht bzw. die bei Betrieb der Werkzeugmaschine erzeugte Wärmemenge kann mit der Erfindung erheblich reduziert werden. Vorteilhafterweise kann mit der Erfindung eine Energieversorgungsvorrichtung bereitgestellt werden, die vor allem auch solche Werkzeugmaschine optimal mit elektrischer Energie versorgen kann, die hohe Anforderungen an Leistung und Entladestrom stellen. Mit anderen Worten kann mit der Erfindung eine Energieversorgungsvorrichtung für besonders leistungsstarke Werkzeugmaschine bereitgestellt werden, mit denen beispielsweise auf Baustellen schwere Bohr- oder Abbrucharbeiten verrichtet werden.

Vorteilhafterweise kann die Kombination des geringen Erwärmungskoeffizienten mit der hohen Konstant-Strom-Abgabe durch eine optimierte Zellgeometrie erreicht werden, in der beispielsweise das Verhältnis der Anzahl der zellinternen Stromableiter in Relation zur Kapazität möglichst hoch ist. Dies führt vorteilhafterweise dazu, dass ein Innenwiderstand der mindestens einen Zellen reduziert werden kann.

Der Begriff «Werkzeugmaschine» ist im Sinne der Erfindung als typisches Gerät zu verstehen, dass auf einer Baustelle, beispielsweise einer Hochbau-Baustelle und/oder einer Tiefbau-Baustelle, verwendet werden kann. Es kann sich um Bohrhämmer, Meißelgeräte, Kernbohrgerät, Winkel- oder Trennschleifer, Trenngeräte oder dergleichen handeln, ohne darauf beschränkt zu sein. Darüber hinaus können Hilfsgeräte, wie sie gelegentlich auf Baustellen verwendet werden, wie Lampen, Radios, Staubsauger, Meßgeräte, Bau-Roboter, Schubkarren, Transportgeräte, Vorschubvorrichtungen oder andere Hilfsgeräte «Werkzeugmaschine» im Sinne der Erfindung sein. Die Werkzeugmaschine kann insbesondere eine mobile Werkzeugmaschine sein, wobei die vorgeschlagene Energieversorgungsvorrichtung insbesondere auch in stationären Werkzeugmaschinen, wie ständergeführten Bohrgeräten oder Kreissägen, zum Einsatz kommen kann. Bevorzugt sind aber handgeführte Werkzeugmaschinen, die insbesondere akku- oder batteriebetrieben sind.

Es ist im Sinne der Erfindung bevorzugt, dass die mindestens eine Zelle eine Temperatur-Abkühl-Halbwertzeit kleiner als 12 Minuten aufweist, bevorzugt kleiner 10 Minuten, besonders bevorzugt kleiner 8 Minuten. Das bedeutet im Sinne der Erfindung bevorzugt, dass sich bei freier Konvektion eine Temperatur der mindestens einen Zelle in weniger als 12, 10 oder 8 min halbiert. Die Temperatur-Abkühl-Halbwertzeit wird vorzugsweise in einem Ruhezustand der Energieversorgungsvorrichtung ermittelt, d.h. wenn die Energieversorgungsvorrichtung nicht in Betrieb, d.h. mit einer Werkzeugmaschine verbunden vorliegt. Vor allem Energieversorgungsvorrichtungen mit Temperatur-Abkühl-Halbwertzeiten von kleiner als 8 min haben sich als besonders geeignet für den Einsatz bei leistungsstarken Werkzeugmaschinen gezeigt. Selbstverständlich kann die Temperatur-Abkühl-Halbwertzeit auch einen Wert von 8,5 Minuten, 9 Minuten 20 Sekunden oder von 11 Minuten 47 Sekunden aufweisen.

Durch die überraschend geringe Temperatur-Abkühl-Halbwertzeit der vorgeschlagenen Energieversorgungsvorrichtung verweilt die im Betrieb der Werkzeugmaschine oder bei ihrem Laden erzeugte Wärme nur für kurze Zeit innerhalb der mindestens einen Zelle. Auf diese Weise kann die Zelle besonders schnell wieder aufgeladen werden und steht zügig für einen erneuten Einsatz in der Werkzeugmaschine zur Verfügung. Vielmehr kann die thermische Belastung der Komponente der Energieversorgungsvorrichtung oder der Werkzeugmaschine mit der vorgeschlagenen Energieversorgungsvorrichtung erheblich reduziert werden. Dadurch kann die Energieversorgungsvorrichtung geschont und ihre Lebenszeit verlängert werden.

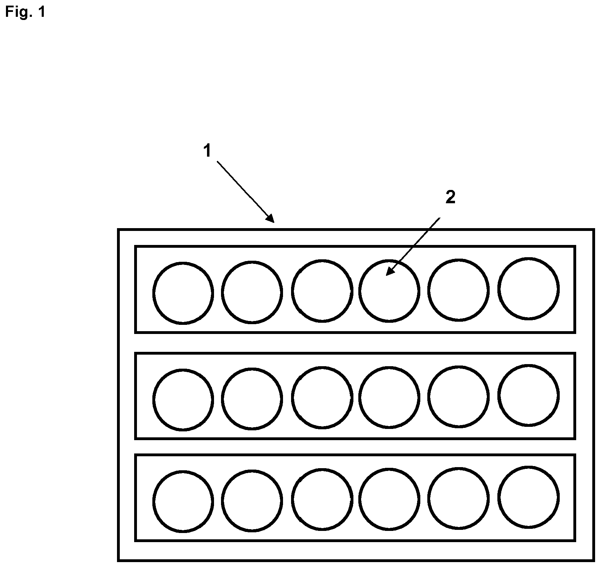

Es ist im Sinne der Erfindung bevorzugt, dass die mindestens eine Zelle in einem Batteriepack der Energieversorgungsvorrichtung angeordnet ist. In dem Batteriepack können vorzugsweise eine Reihe von Einzelzellen zusammengefasst werden und auf diese Weise optimal in die Energieversorgungsvorrichtung eingefügt werden. Beispielsweise können 5, 6 oder 10 Zellen einen Batteriepack bilden, wobei auch ganzzahlige Vielfache dieser Zahlen möglich sind. Beispielsweise kann die Energieversorgungsvorrichtung einzelne Zellstränge aufweisen, die beispielsweise 5, 6 oder 10 Zellen umfassen können. Eine Energieversorgungsvorrichtung mit beispielsweise drei Strängen à fünf Zellen kann beispielsweise 15 Einzelzellen umfassen. Die in Fig. 1 als Ausführungsbeispiel abgebildete Energieversorgungsvorrichtung weist beispielsweise achtzehn Zellen auf, die in drei Strängen angeordnet sind.

Es ist im Sinne der Erfindung bevorzugt, dass die Energieversorgungsvorrichtung eine Kapazität von wenigstens 2,2 Ah, bevorzugt wenigstens 2,5 Ah aufweist. Tests haben gezeigt, dass die genannten Kapazitätswerte besonders gut für den Einsatz von leistungsstarken Werkzeugmaschinen im Baugewerbe geeignet sind und den dortigen Anforderungen an Verfügbarkeit von elektrischer Energie und möglicher Nutzungsdauer der Werkzeugmaschine besonders gut entsprechen.

Vorzugsweise ist die mindestens eine Zelle der Energieversorgungsvorrichtung dazu eingerichtet, einen Entladestrom über wenigstens 10 s von wenigstens 20 A abzugeben. Beispielsweise kann eine Zelle der Energieversorgungsvorrichtung dazu ausgebildet sein, einen Entladestrom über wenigstens 10 s von wenigstens 20 A, insbesondere wenigstens 25 A, bereitzustellen. Mit anderen Worten kann die mindestens eine Zelle einer Energieversorgungsvorrichtung dazu eingerichtet sein, einen Dauerstrom von wenigstens 20 A, insbesondere von wenigstens 25 A, bereitzustellen.

Gleichfalls ist es denkbar, dass Spitzenströme, insbesondere kurzzeitige Spitzenströme, zu einer starken Erwärmung der Energieversorgungsvorrichtung führen können. Daher ist eine Energieversorgungsvorrichtung mit einer leistungsstarken Kühlung, wie sie durch die vorliegend beschriebenen Maßnahmen erzielt werden kann, besonders vorteilhaft. Denkbar ist beispielsweise, dass die mindestens eine Zelle der Energieversorgungsvorrichtung über 1 Sekunde hinweg wenigstens 50 A bereitstellen kann. Mit anderen Worten ist es im Sinne der Erfindung bevorzugt, dass die mindestens eine Zelle der Energieversorgungsvorrichtung dazu eingerichtet ist, einen Entladestrom über wenigstens 1 s von wenigstens 50 A bereitzustellen. Werkzeugmaschinen können oftmals kurzzeitig hohe Leistungen benötigen. Eine Energieversorgungsvorrichtung, deren Zellen dazu in der Lage sind, einen derartigen Spitzenstrom und/oder einen derartigen Dauerstrom abzugeben, kann daher besonders geeignet für leistungsstarke Werkzeugmaschinen sein, wie sie auf Baustellen eingesetzt werden.

Es ist im Sinne der Erfindung bevorzugt, dass die mindestens eine Zelle einen Elektrolyten umfasst, wobei der Elektrolyt bei Raumtemperatur vorzugsweise in einem flüssigen Aggregatzustand vorliegt. Der Elektrolyt kann Lithium, Natrium und/oder Magnesium umfassen, ohne darauf beschränkt zu sein. Insbesondere kann der Elektrolyt Lithium-basiert sein. Alternativ oder ergänzend kann er auch Natrium-basiert sein. Denkbar ist auch, dass der Akkumulator Magnesium-basiert ist. Die elektrolyt-basierte Energieversorgungsvorrichtung kann eine Nennspannung von wenigstens 10 V, bevorzugt wenigstens 18 V, insbesondere von wenigstens 28 V, beispielsweise 36 V, aufweisen. Ganz besonders bevorzugt ist eine Nennspannung in einem Bereich von 18 bis 22 V, insbesondere in einem Bereich von 21 bis 22 V. Die mindestens eine Zelle der Energieversorgungsvorrichtung kann beispielsweise eine Spannung von 3,6 V aufweisen, ohne darauf beschränkt zu sein.

Es ist im Sinne der Erfindung bevorzugt, dass die Energieversorgungsvorrichtung beispielsweise mit einer Laderate von 1,5 C, bevorzugt 2 C und am meisten bevorzugt von 3 C geladen wird. Unter einer Laderate xC kann dabei die Stromstärke verstanden werden, die benötigt wird, um eine entladene Energieversorgungsvorrichtung in einem dem Zahlwert × der Laderate × C entsprechenden Bruchteil einer Stunde vollständig aufzuladen. Eine Laderate von 3 C ermöglicht beispielsweise ein vollständiges Aufladen des Akkumulators binnen 20 Minuten.

Die Erfindung macht von dem Gedanken Gebrauch, dass die Viskosität des flüssigen Elektrolyten mit steigender Temperatur der Energieversorgungsvorrichtung und damit auch des Elektrolyten abnehmen kann. Insbesondere können bei Temperaturen von mindestens 60 °C besonders günstige Viskositäten erreicht werden. Durch Senkung der Viskosität kann wiederum ein Innenwiderstand des Akkumulators gesenkt werden. Hierdurch lassen sich vorteilhafterweise höhere Ladeströme und/ oder geringere Verlustleistungen erzielen.

Ein weiterer Gedanke ist, dass ein als "Lithium-plating" bekannter Effekt bei einer derartigen Temperatur im Vergleich zu geringeren Kerntemperaturen reduziert oder vermieden werden kann. Die Raumtemperatur kann zum Beispiel einer Temperatur in einem Bereich von 19°C bis 23 °C entsprechen. Insbesondere kann die Raumtemperatur beispielsweise 21 °C entsprechen.

Der Elektrolyt kann eine Viskosität von wenigstens 0,1 mPa s aufweisen. Er kann eine Viskosität von höchstens 10 mPa·s aufweisen. Der Elektrolyt kann eine Transferenzzahl für Lithium-Transport zwischen 0,3 und 0,7 bei Raumtemperatur und 1 bar Atmosphärendruck aufweisen. Er kann einen Diffusionskoeffizient bei Raumtemperatur und 1 bar Atmosphärendruck für den Lithium-Transport zwischen 3×10⁻⁶ cm2/s und 20×10⁻⁶ cm2/s aufweisen. Insbesondere kann der Elektrolyt ca. 1-molares LiPF6 in einem Gemisch von Ethylencarbonat und Dimethylcarbonat aufweisen. Das Gemisch kann ein Gewichtsanteilsverhältnis von 3 zu 7 aufweisen.

Um eine Überhitzung des Akkumulators zu vermeiden, kann vorgesehen sein, dass wenn die Temperatur eine Grenztemperatur erreicht oder überschreitet, die Laderate reduziert und/oder der Ladevorgang unterbrochen wird. Die Grenztemperatur kann beispielsweise zwischen 70 °C und 95 °C, insbesondere bei 80 °C, liegen. Die Laderate kann auf 1 C oder weniger reduziert werden. Beispielsweise kann sie auf höchstens 0,5 C reduziert werden. Die Reduktion der Laderate beziehungsweise die Unterbrechung des Ladevorgangs, kann für eine bestimmte Zeitdauer erfolgen.

Es ist im Sinne der Erfindung bevorzugt, dass die mindestens Zelle der Energieversorgungsvorrichtung eine Oberfläche A und ein Volumen V aufweist, wobei ein Verhältnis A/V von Oberfläche zu Volumen größer ist als das Sechsfache, bevorzugt das Achtfache und besonders bevorzugt das Zehnfache des Kehrwerts der dritten Wurzel des Volumens.

Es hat sich gezeigt, dass Energieversorgungsvorrichtungen, deren Zellen die genannte Relation erfüllen, deutlich besser gekühlt werden können als bisher bekannte Energieversorgungsvorrichtungen mit beispielsweise zylinderförmigen Zellen. Die obige Relation kann beispielsweise dadurch erfüllt werden, dass die Zellen der vorgeschlagenen Energieversorgungsvorrichtung zwar eine zylinderförmige Grundform aufweisen, aber zusätzliche Oberflächen vergrößernde Elemente auf ihrer Oberfläche angeordnet sind. Dabei kann es sich beispielsweise um Rippen, Zähne oder dergleichen handeln. Es können im Rahmen der Erfindung auch Zellen verwendet werden, die keine zylinderförmige oder zylindrische Grundform aufweisen, sondern vollkommen anders geformt sind. Beispielsweise können die Zellen der vorgeschlagenen Energieversorgungsvorrichtung eine im Wesentlichen quader- oder würfelförmige Grundform aufweisen. Der Begriff "im Wesentlichen" ist dabei für den Fachmann nicht unklar, weil der Fachmann weiß, dass im Kontext der vorliegenden Erfindung beispielsweise auch ein Quader mit Einbuchtungen oder abgerundeten Ecken und/oder Kanten unter den Begriff "im Wesentlichen quaderförmig" fallen soll.

Die Formulierung, dass das Verhältnis A/V von Oberfläche zu Volumen größer ist als das Achtfache des Kehrwerts der dritten Wurzel des Volumens, kann einer anderen Ausdrucksweise beispielsweise auch dadurch beschrieben werden, dass die Oberfläche A der mindestens einen Zelle ist größer ist als das Achtfache der dritten Wurzel des Quadrats des Volumens V. Diese Relation kann vorzugsweise auch durch die Formel ***A***>8****V***^(**2**/**3**) zum Ausdruck gebracht werden. In bevorzugten Ausführungsformen der Erfindung kann es bevorzugt sein, dass das Verhältnis A/V von Oberfläche zu Volumen größer ist als das Zehnfache des Kehrwerts der dritten Wurzel des Volumens. Dabei sind zur Prüfung, ob die Relation erfüllt ist, stets Werte in der gleichen Grundeinheit einzusetzen. Wenn beispielsweise ein Wert für die Oberfläche in m² in die obige Formel eingesetzt wird, so wird für das Volumen vorzugsweise ein Wert in der Einheit m³ eingesetzt. Wenn beispielsweise ein Wert für die Oberfläche in der Einheit cm² in die obige Formel eingesetzt wird, so wird für das Volumen vorzugsweise ein Wert in der Einheit cm³ eingesetzt. Wenn beispielsweise ein Wert für die Oberfläche in der Einheit mm² in die obige Formel eingesetzt wird, so wird für das Volumen vorzugsweise ein Wert in der Einheit mm³ eingesetzt.

Die Erfinder haben erkannt, dass bei konventionellen Energieversorgungsvorrichtungen, wie sie aus dem Stand der Technik bekannt sind, hohe Erwärmungen insbesondere auf hohe Innenwiderstände der einzelnen Zellen der Energieversorgungsvorrichtung zurückzuführen sind. Zur Reduzierung dieses Innenwiderstand schlägt die Erfindung vor, solche Zellen innerhalb einer Energieversorgungsvorrichtung zu verwenden, bei denen die Oberfläche A von mindestens einer Zelle innerhalb der Energieversorgungsvorrichtung größer ist als das Achtfache der dritten Wurzel des Quadrats des Volumens V der mindestens einen Zelle. Durch Tests konnte gezeigt werden, dass Energieversorgungsvorrichtungen, bei denen dieser Zusammenhang zwischen Oberfläche und Volumen der mindestens einen Zelle der Energieversorgungsvorrichtung erfüllt ist, deutlich besser gekühlt werden können als die Zellen in konventionellen Energieversorgungsvorrichtungen. Die Reduzierung des Innenwiderstands führt vorteilhafterweise zu erheblich verbesserten thermischen Eigenschaften der Energieversorgungsvorrichtung. Dies äußert sich zum einen darin, dass unerwünschte Wärme gar nicht erst entsteht und darin, dass die weniger große Menge an unerwünschter Wärme besser und mit geringerem Aufwand abgeführt werden kann.

Zellgeometrien, die die erfindungsgemäße Relation von ***A***>8****V***^(**2**/**3**) erfüllen weisen vorteilhafterweise ein besonders günstiges Verhältnis zwischen der für die Kühlwirkung maßgeblichen Außenfläche der Zelle zum Zellvolumen auf, wobei die Erfinder erkannt haben, dass das Verhaltnis von Oberfläche zu Volumen der mindestens einen Zelle der Energieversorgungsvorrichtung einen wichtigen Einfluss auf die Kapazität der Energieversorgungsvorrichtung hat, sowie auf deren Entwärmung. Die verbesserte Kühlfähigkeit der vorgeschlagenen Energieversorgungsvorrichtung kann vorteilhafterweise durch eine Erhöhung der Zelloberfläche bei gleichbleibendem Volumen und geringem Innenwiderstand der mindestens einen Zellen erreicht werden.

Es ist im Sinne der Erfindung bevorzugt, dass die mindestens eine Zelle einen Zellkern aufweist, wobei kein Punkt innerhalb des Zellkerns mehr als 5 mm von einer Oberfläche der Energieversorgungsvorrichtung entfernt ist. Wenn die Energieversorgungsvorrichtung entladen wird, beispielsweise wenn sie mit einer Werkzeugmaschine verbunden ist und mit der Werkzeugmaschine gearbeitet wird, kann im Zellkern Wärme entstehen. Diese Wärme kann in dieser konkreten Ausgestaltung der Erfindung auf verhältnismäßig kurzem Wege bis zur Oberfläche der Zelle der Energieversorgungsvorrichtung transportiert werden. Von der Oberfläche kann die Wärme optimal abgeführt werden. Somit kann eine solche Energieversorgungsvorrichtung eine gute Kühlung, insbesondere eine vergleichsweise gute Selbstkühlung, aufweisen. Die Zeitdauer bis zum Erreichen der Grenztemperatur kann verlängert und/oder das Erreichen der Grenztemperatur vorteilhafterweise gänzlich vermieden werden. Als weiterer Vorteil der Erfindung kann Innerhalb des Zellkerns eine verhältnismäßig homogene Temperaturverteilung erreicht werden. Hierdurch kann sich eine gleichmäßige Alterung des Akkumulators ergeben. Dies wiederum kann die Lebensdauer der Energieversorgungsvorrichtung erhöhen.

Es ist im Sinne der Erfindung bevorzugt, dass die mindestens eine Zelle eine maximale Konstant-Strom-Abgabe von größer als 20 Ampère, bevorzugt größer als 30 Ampère, am meisten bevorzugt größer 40 Ampère aufweist. Die maximale Konstant-Strom-Abgabe ist die Menge an Strom einer Zelle oder einer Energieversorgungsvorrichtung, die entnommen werden kann, ohne dass die Zelle oder die Energieversorgungsvorrichtung an eine Temperatur-Obergrenze gelangt. Mögliche Temperatur-Obergrenze können in einem Bereich von 60 °C oder 70 °C liegen, ohne darauf beschränkt zu sein. Die Einheit der maximalen Konstant-Strom-Abgabe ist Ampère.

Bei allen Wertebereichen, die im Kontext der vorliegenden Erfindung genannt werden, sollen stets auch alle Zwischenwerte als offenbart gelten. Als Beispiel sollen bei der maximalen Konstant-Strom-Abgabe auch Werte zwischen 20 und 30 A als offenbart gelten, also zum Beispiel 21; 22,3; 24, 25,55 oder 27,06 Ampère usw. Darüber hinaus sollen auch Werte zwischen 30 und 40 A als offenbart gelten, also zum Beispiel 32; 33,3; 36, 38,55 oder 39,07 Ampère usw.

Es ist im Sinne der Erfindung bevorzugt, dass die Energieversorgungsvorrichtung eine Entlade-C-Rate von größer als 80 · t^(-0,45) aufweist, wobei der Buchstabe "t" für die Zeit in der Einheit Sekunden steht. Die C-Rate ermöglicht vorteilhafterweise eine Quantifizierung der Lade- und Entladeströme für Energieversorgungsvorrichtungen, wobei die hier verwendete Enlade-C-Rate insbesondere die Quantifizierung der Entladeströme von Energieversorgungsvorrichtungen ermöglicht. Mit der C-Rate können beispielsweise die maximal zulässigen Lade- und Entladeströme angegeben werden. Diese Lade- und Entladeströme hängen vorzugsweise von der Nennkapazität der Energieversorgungsvorrichtung ab. Die ungewöhnlich hohe Entlade-C-Rate von 80 · t^(-0,45) bedeutet vorteilhafterweise, dass mit der vorgeschlagenen Energieversorgungsvorrichtung besonders hohe Entladeströme erreicht werden können, die für den Betrieb von leistungsstarken Werkzeugmaschinen im Baugewerbe erforderlich sind. Beispielsweise können die Entladeströme in einem Bereich von größer als 40 Ampère, bevorzugt größer als 60 Ampère oder noch mehr bevorzugt größer als 80 Ampère liegen.

Es ist im Sinne der Erfindung bevorzugt, dass die Zelle einen Zelltemperaturgradienten von kleiner 10 Kelvin aufweist. Der Zelltemperaturgradient ist vorzugsweise ein Maß für Temperaturunterschiede innerhalb der mindestens einen Zelle der vorgeschlagenen Energieversorgungsvorrichtung, wobei es im Sinne der Erfindung bevorzugt ist, dass die Zelle eine möglichst gleichmäßige Temperaturverteilung aufweist, d.h. dass eine Temperatur in einem inneren Bereich der Zelle möglichst wenig abweicht von einer Temperatur, die im Bereich einer Mantel- oder Außenfläche der Zelle gemessen wird.

In einem zweiten Aspekt betrifft die Erfindung eine Werkzeugmaschine mit einer vorgeschlagenen Energieversorgungsvorrichtung. Die Werkzeugmaschine kann insbesondere mit der Energieversorgungsvorrichtung verbunden werden, um von ihr mit elektrischer Energie versorgt zu werden. Die für die Energieversorgungsvorrichtung eingeführten Begriffe, Definitionen und technischen Vorteile gelten vorzugsweise für die Werkzeugmaschine analog.

Weitere Vorteile ergeben sich aus der folgenden Figurenbeschreibung. Die Figur, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

In der Figur sind gleiche und gleichartige Komponenten mit gleichen Bezugszeichen beziffert. Es zeigen:
- Fig. 1: schematische Seitenansicht einer bevorzugten Ausgestaltung der Energieversorgungsvorrichtung
- Fig. 2: schematische Seitenansicht einer Werkzeugmaschine mit einer bevorzugten Ausgestaltung der Energieversorgungsvorrichtung
- Fig. 3: schematische Darstellung einer bevorzugten Ausgestaltung einer Zelle
- Fig. 4: schematische Detaildarstellung einer bevorzugten Ausgestaltung einer Zelle (Unterseite)
- Fig. 5: schematische Detaildarstellung einer bevorzugten Ausgestaltung einer Zelle (Oberseite)
- Fig. 6: schematische Schnittdarstellung einer bevorzugten Ausgestaltung einer Zelle
- Fig. 7: schematische Schnittdarstellung einer bevorzugten Ausgestaltung einer Zelle
- Fig. 8: schematische Darstellung einer bevorzugten Ausgestaltung einer Zelle von außen

### Ausführungsbeispiele und Figurenbeschreibung:

Figur 1 zeigt eine schematische Seitenansicht einer bevorzugten Ausgestaltung der Energieversorgungsvorrichtung 1. Die in Fig. 1 dargestellte Energieversorgungsvorrichtung 1 weist achtzehn Zellen 2 auf, wobei die achtzehn Zellen 2 in drei Strängen innerhalb der Energieversorgungsvorrichtung 1 angeordnet vorliegen. Die Zellen 2 werden insbesondere durch die Kreise symbolisiert, während die Stränge durch die länglichen Rechtecke symbolisiert werden, die die Kreise («Zellen 2») umgeben.

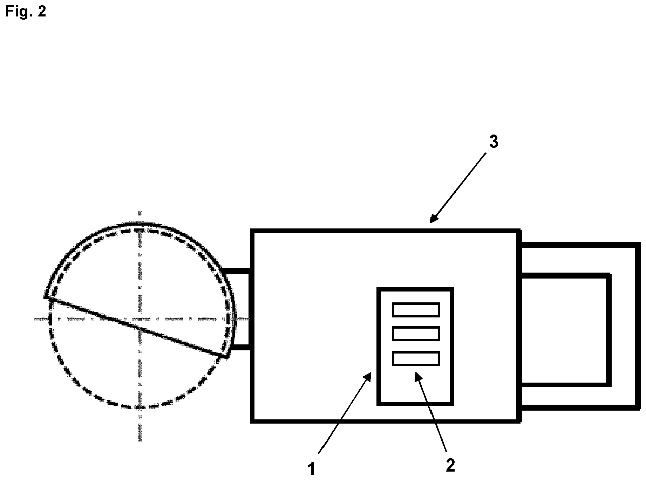

Fig. 2 zeigt eine schematische Ansicht einer Werkzeugmaschine 3 mit einer vorgeschlagenen Energieversorgungsvorrichtung 1. Bei der Werkzeugmaschine 3 kann es sich beispielsweise um einen Trennschleifer handeln, der als Werkzeug eine Trennscheibe aufweist. Die Werkzeugmaschine 3 kann einen Griff aufweisen, der beispielsweise als hinterer Handgriff ausgebildet ist. Darüber hinaus kann die Werkzeugmaschine 3 in an sich bekannter Weise Bedienelemente, wie Schalter oder Knöpfe, aufweisen. Außerdem kann die Werkzeugmaschine 3 einen Motor (nicht dargestellt) aufweisen, der einen Verbraucher darstellen und von der Energieversorgungsvorrichtung 1 mit elektrischer Energie versorgt werden kann.

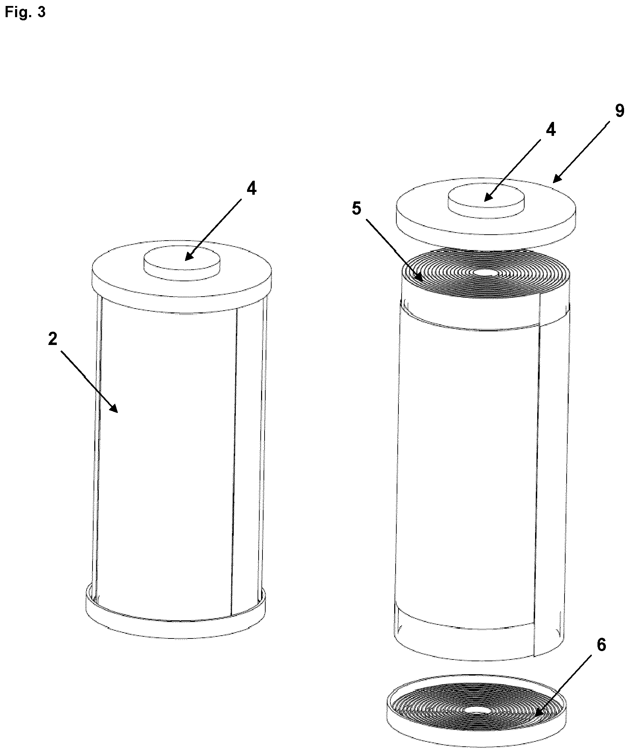

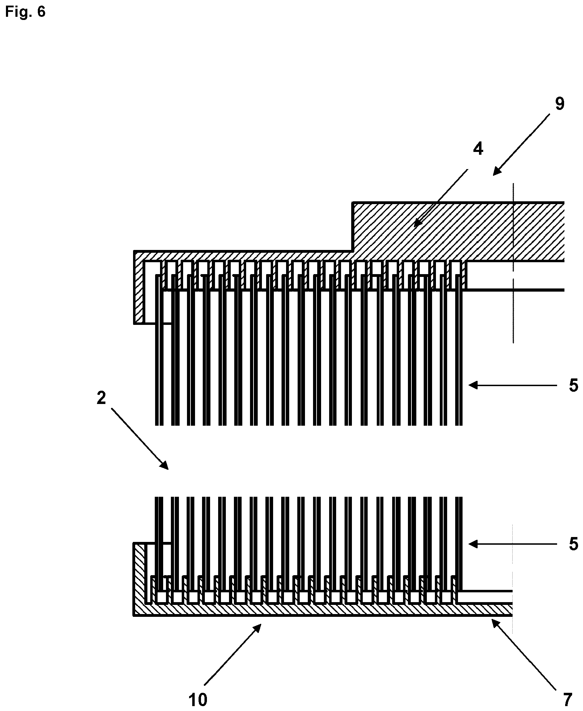

Fig. 3 zeigt eine schematische Darstellung einer bevorzugten Ausgestaltung einer Zelle 2, wobei die in Fig. 3 dargestellte Zelle 2 insbesondere eine Rundzelle oder eine Zelle in Zylinderform ist. Die Zelle 2 weist an ihrer Oberseite 9 eine ersten Pol 4 auf. Auf der Unterseite 10 der Zelle 2 kann ein zweiter Pol 7 der Zelle 2 angeordnet vorliegen (siehe ab Fig. 6). Der erste Pol 4 der Zelle 2 kann vorzugsweise ein Pluspol sein, während der zweite Pol 7 der Zelle 2 bevorzugt ein Minuspol sein kann. Ebenfalls im Bereich der Unterseite 10 der Zelle 2 kann eine Stromsammler 6 angeordnet vorliegen, wobei der Stromsammler 6 insbesondere negativ geladen sein kann. Zwischen der Oberseite 9 und der Unterseite 10 der Zelle 2 erstreckt sich das Zellinnere, das von einem Zellwickel gebildet und von einer Außenwand umgeben wird. Im Inneren der Zelle 2 kann vorzugsweise eine Wicklung 5 angeordnet vorliegen, wobei die Wicklung 5 vorzugsweise eine Anode, eine Kathode und einen Separator umfassen kann. Die Wicklung 5 der Zelle 2 stellt vorzugsweise deren «Aktivpart» dar. Es ist im Sinne der Erfindung bevorzugt, dass an der Wicklung 5 eine Spannung anliegt bzw. im Inneren der Zelle 2 der elektrische Strom zu Versorgung der Werkzeugmaschine 3 mit elektrischer Energie entsteht. Der Stromsammler 6 ist vorzugsweise dazu eingerichtet, eine Verbindung herzustellen zwischen der Wicklung 5 und dem zweiten Pol 7 der Zelle 2. Die Pole 4, 7 der Zelle 2 können mit weiteren Stromleitern oder Kabeln verbunden werden, um den elektrischen Strom beispielsweise zur Werkzeugmaschine 3 zu transportieren. Die Stromleitern oder Kabeln können beispielsweise durch Anschweißen befestigt werden.

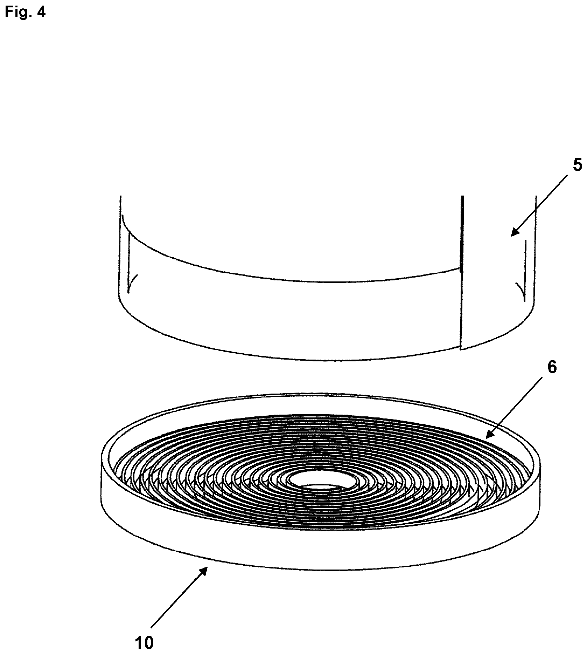

Fig. 4 zeigt eine schematische Detaildarstellung einer bevorzugten Ausgestaltung der Unterseite 10 einer Zelle 2. Dargestellt ist der vorzugsweise negativ geladene Stromsammler 6, sowie die Wicklung 5 der Zelle 2. Bei der Zelle 2, die in Figur 4 dargestellt wird, handelt es sich insbesondere um eine Rundzelle. Die Zelle 2 kann selbstverständlich auch andere Formen aufweisen.

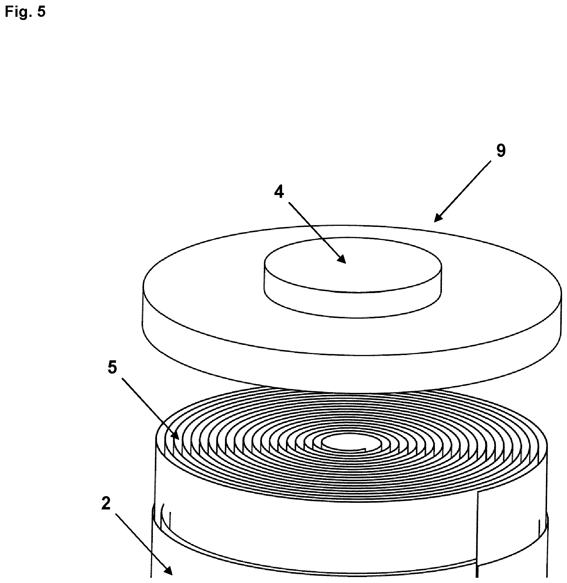

Fig. 5 zeigt eine schematische Detaildarstellung einer bevorzugten Ausgestaltung der Oberseite 9 einer Zelle 2. Dargestellt ist der erste Pol 4 der Zelle 2, der vorzugsweise einen Pluspol darstellt. Der erste Pol 4 kann vorzugsweise auch als «positiver Tab» bezeichnet werden. Darüber hinaus ist in Fig. 5 die Wicklung 5 der Zelle 2 dargestellt. Bei der Zelle 2, die in Figur 5 dargestellt wird, handelt es sich insbesondere um eine Rundzelle. Die Zelle 2 kann selbstverständlich auch andere Formen aufweisen.

Fig. 6 zeigt eine schematische Schnittdarstellung einer bevorzugten Ausgestaltung einer Zelle 2. Auf der Oberseite 9 der Zelle 2 ist der Pluspol 4 der Zelle 2 angeordnet, während auf der Unterseite 10 der Zelle 2 der Minuspol 7 der Zelle 2 angeordnet ist. Der Minuspol 7 kann beispielsweise mit dem negativen Stromsammler 6 verbunden sein. Bei der Zelle 2, die in Figur 6 dargestellt wird, handelt es sich insbesondere um eine Rundzelle. Die Zelle 2 kann selbstverständlich auch andere Formen aufweisen.

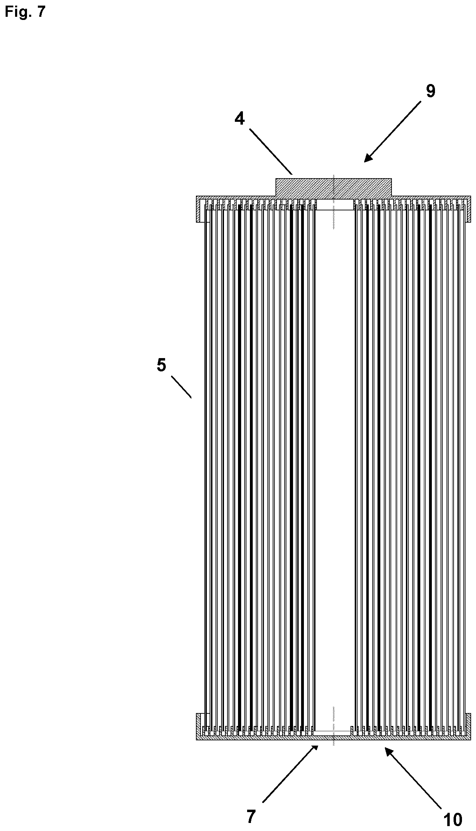

Fig. 7 zeigt eine weitere schematische Schnittdarstellung einer bevorzugten Ausgestaltung einer Zelle 2. Dargestellt sind insbesondere der Pluspol 4 an der Oberseite 9 der Zelle 2, die Wicklung 5 und der Minuspol 7 an der Unterseite 10 der Zelle 2. Bei der Zelle 2, die in Figur 4 dargestellt wird, handelt es sich insbesondere um eine Rundzelle. Die Zelle 2 kann selbstverständlich auch andere Formen aufweisen.

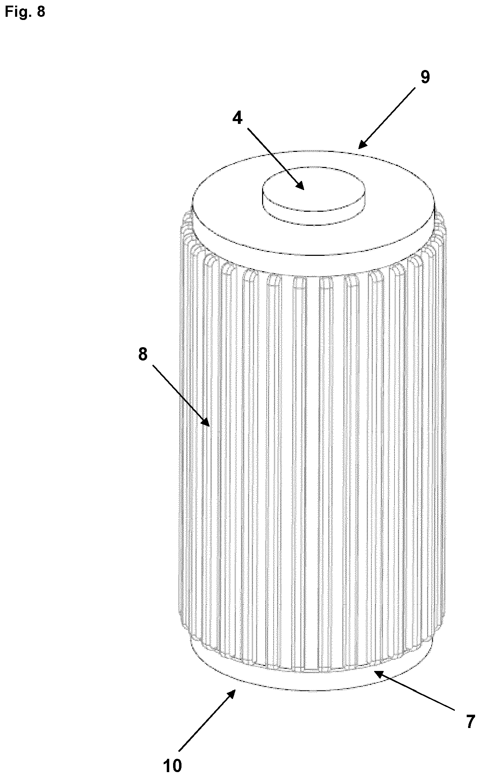

Fig. 8 zeigt eine schematische Darstellung einer bevorzugten Ausgestaltung einer Zelle 2 von außen. Auf der Außenseite der Zelle 2 können oberflächenvergrößernde Elemente 8, wie Kühlrippen oder Lamellen, angeordnet sein. Die oberflächenvergrößernden Elemente 8 sind vorzugsweise dazu eingerichtet, die Entwärmung der Zelle 2 und ihre Kühlung zu verbessern. Bei der Zelle 2, die in Figur 8 dargestellt wird, handelt es sich insbesondere um eine Rundzelle. Die Zelle 2 kann selbstverständlich auch andere Formen aufweisen.

### Bezugszeichenliste

- 1: Energieversorgungsvorrichtung
- 2: Zelle
- 3: Werkzeugmaschine
- 4: erster Pol einer Zelle
- 5: Wicklung innerhalb der Zelle
- 6: Stromsammler
- 7: zweiter Pol einer Zelle
- 8: oberflächenvergrößernde Elemente
- 9: Oberseite einer Zelle
- 10: Unterseite einer Zelle

## Patentansprüche

1. Energieversorgungsvorrichtung (1), insbesondere für eine Werkzeugmaschine (3), wobei die Energieversorgungsvorrichtung (1) mindestens eine Zelle (2) umfasst,
**dadurch gekennzeichnet, dass**
die mindestens eine Zelle (2) einen Innenwiderstand DCR_I von kleiner als 10 Milliohm aufweist.

2. Energieversorgungsvorrichtung (1) nach Anspruch 1
**dadurch gekennzeichnet, dass**
die mindestens eine Zelle (2) einen Innenwiderstand DCR_I von kleiner als 8 Milliohm und bevorzugt kleiner 6 Milliohm aufweist.

3. Energieversorgungsvorrichtung (1) nach Anspruch 1 oder 2
**dadurch gekennzeichnet, dass**
ein Verhältnis eines Widerstands der mindestens einen Zelle (2) zu einer Oberfläche A der mindestens einen Zelle (2) kleiner als 0,2 Milliohm/cm² ist, bevorzugt kleiner als 0,1 Milliohm/cm², am meisten bevorzugt kleiner als 0,05 Milliohm/cm².

4. Energieversorgungsvorrichtung (1) nach einem der vorhergehenden Ansprüche
**dadurch gekennzeichnet, dass**
ein Verhältnis eines Widerstands der mindestens einen Zelle (2) zu einem Volumen V der mindestens einen Zelle (2) kleiner als 0,4 Milliohm/cm³ ist, bevorzugt kleiner als 0,3 Milliohm/cm³, am meisten bevorzugt kleiner als 0,2 Milliohm/cm³.

5. Energieversorgungsvorrichtung (1) nach einem der vorhergehenden Ansprüche
**dadurch gekennzeichnet, dass**
die mindestens eine Zelle (2) einen Erwärmungskoeffizienten von kleiner als 1,0 W/(Ah·A) aufweist, bevorzugt von kleiner als 0,75 W/(Ah·A) und besonders bevorzugt kleiner als 0,50 W/(Ah·A).

6. Energieversorgungsvorrichtung (1) nach einem der vorhergehenden Ansprüche
**dadurch gekennzeichnet, dass**
die mindestens eine Zelle (2) dazu ausgebildet ist, im Wesentlichen konstant einen Strom von größer als 1.000 Ampère/Liter abzugeben.

7. Energieversorgungsvorrichtung (1) nach einem der vorhergehenden Ansprüche **dadurch gekennzeichnet, dass**
die Energieversorgungsvorrichtung (1) eine Kapazität von wenigstens 2,2 Ah, bevorzugt wenigstens 2,5 Ah aufweist.

8. Energieversorgungsvorrichtung (1) nach einem der vorhergehenden Ansprüche **dadurch gekennzeichnet, dass**
die mindestens eine Zelle (2) der Energieversorgungsvorrichtung (1) dazu eingerichtet ist, einen Entladestrom über wenigstens 10 s von wenigstens 20 A bereitzustellen.

9. Energieversorgungsvorrichtung (1) nach einem der vorhergehenden Ansprüche **dadurch gekennzeichnet, dass**
die mindestens eine Zelle (2) der Energieversorgungsvorrichtung (1) dazu eingerichtet ist, einen Entladestrom über wenigstens 1 s von wenigstens 50 A bereitzustellen.

10. Energieversorgungsvorrichtung (1) nach einem der vorhergehenden Ansprüche **dadurch gekennzeichnet, dass**
die mindestens eine Zelle (2) eine maximale Konstant-Strom-Abgabe von größer als 20 Ampère, bevorzugt größer als 30 Ampère, am meisten bevorzugt größer 40 Ampère aufweist.

11. Energieversorgungsvorrichtung (1) nach einem der vorhergehenden Ansprüche **dadurch gekennzeichnet, dass**
die Energieversorgungsvorrichtung (1) eine Entlade-C-Rate von größer als 80 · t^(-0,45) aufweist.

12. Energieversorgungsvorrichtung (1) nach einem der vorhergehenden Ansprüche **dadurch gekennzeichnet, dass**
die mindestens eine Zelle (2) einen Zelltemperaturgradienten von kleiner 10 Kelvin aufweist.

13. Energieversorgungsvorrichtung (1) nach einem der vorhergehenden Ansprüche **dadurch gekennzeichnet, dass**
die mindestens Zelle (2) eine Oberfläche A und ein Volumen V aufweisen, wobei ein Verhältnis A/V von Oberfläche zu Volumen größer ist als das Sechsfache, bevorzugt das Achtfache und besonders bevorzugt das Zehnfache des Kehrwerts der dritten Wurzel des Volumens.

14. Energieversorgungsvorrichtung (1) nach einem der vorhergehenden Ansprüche **dadurch gekennzeichnet, dass**
die mindestens eine Zelle (2) einen Zellkern aufweist, wobei kein Punkt innerhalb des Zellkerns mehr als 5 mm von einer Oberfläche der Energieversorgungsvorrichtung (1) entfernt ist.

15. Werkzeugmaschine (3), die zur Versorgung mit elektrischer Energie mit einer Energieversorgungsvorrichtung (1) nach einer der vorhergehenden Ansprüche verbindbar ist.
